# EUROPEAN PATENT SPECIFICATION

(11) **EP 3 157 074 B1**
(45) Date of publication and mention of the grant of the patent: **06.03.2019**
(21) Application number: 16193947.5
(22) Date of filing: 14.10.2016
(51) Int. Cl.: H01M 2/02, H01M 2/06, H01M 2/26, H01M 2/34, H01M 10/052

(54) **BATTERY CELL**
BATTERIEZELLE
CELLULE DE BATTERIE

(30) Priority: 16.10.2015 KR 20150144671
(43) Date of publication of application: 19.04.2017
(73) Proprietor: Hyundai Motor Company, Seoul 06797 (KR)
(72) Inventor: Ahn, Seung Ho, 12921 Gyeonggi-do (KR); Kim, Ik Kyu, 14256 Gyeonggi-do (KR); Shin, Woo Jin, 06335 Seoul (KR); Min, Hong Seok, 16855 Gyeonggi-do (KR); Choi, Sung Min, 38172 Gyeongsangbuk-do (KR); Woo, Jung Je, 10300 Gyeonggi-do (KR); Cho, Jung Young, 01780 Seoul (KR)
(74) Representative: Isarpatent

(56) References cited:
- EP-A1- 2 698 847
- WO-A1-2007/126243
- KR-A- 20150 045 241
- KR-B1- 101 500 229
- US-A1- 2004 126 650
- US-A1- 2012 040 235
- US-A1- 2015 072 185

## Description

### BACKGROUND

### Technical Field

The present disclosure relates to a battery cell, and more particularly, to a pouch type battery cell capable of blocking a current flow when overcharge occurs.

### Description of the Related Art

Since use of portable electric products such as a video camera, a portable phone, a portable personal computer (PC), and the like, has been activated, an importance of a secondary battery mainly used as a driving power source has increased. Research has been actively conducted regarding a secondary battery capable of being charged and discharged unlike a primary battery that cannot be generally recharged in accordance with the development of a digital camera, a cellular phone, a laptop computer, a power tool, an electric bike, an electric vehicle, a hybrid vehicle, a large-capacity power storage device, and the like, in high-tech fields.

Particularly, since a lithium secondary battery has a high energy density per unit weight and is capable of being rapidly charged, compared to other secondary batteries such as an existing lead-acid battery, a nickel-cadmium battery, a nickel-hydrogen battery, a nickel-zinc battery, and the like, use of the lithium secondary battery has actively increased. An operation voltage of the lithium secondary battery is 3.6V or greater, and the lithium secondary battery has been used as a power source of portable electronic equipment. Alternatively, a plurality of lithium secondary batteries are connected with each other in series or in parallel to be used in a high-power electric vehicle, a hybrid vehicle, a power tool, an electric bike, power storage device, an uninterruptible power supply (UPS), and the like.

Since the lithium secondary battery has an operation voltage 3 times greater than that of the nickel-cadmium battery or nickel-metal hybrid battery, and has improved energy density characteristics per unit weight, the use of the lithium secondary battery has rapidly increased. Further, a lithium ion battery using a liquid electrolyte has been used in a form in which the lithium secondary battery is welded and sealed using a cylindrical or prismatic metal can as a container. Since a shape of a can type secondary battery using this metal can as the container is fixed, there is a disadvantage in that a design of an electric product using the can type secondary battery as a power source is restricted, and it may be difficult to decrease a volume thereof Therefore, a power type secondary battery used in a form in which an electrode assembly and an electrolyte are put into a pouch package made of a film and sealed has been developed and used.

However, since the lithium secondary battery has a risk of explosion when the lithium secondary battery is over-heated, it is important to secure safety. Overheating of the lithium secondary battery may be generated by various causes. For example, the lithium secondary battery may be overheated during an over-current exceeding a limit value flows through the lithium secondary battery. When the over-current flows, since heat is generated in the lithium secondary battery by Joule's heat, an internal temperature of the battery is rapidly increased. Further, a rapid increase in the temperature causes a decomposition reaction of the electrolyte solution to cause a thermal runaway phenomenon, thereby finally causing explosion of the battery. The over-current may be generated when a shape metal object penetrates through the lithium secondary battery, insulation between a cathode and an anode is broken by shrinkage of a separator interposed between the cathode and the anode, or a rush current is applied to the battery due to abnormality of a charge circuit connected to the outside or abnormality of load, or the like.

Therefore, the lithium secondary battery is coupled to a protection circuit to protect the battery from an abnormal situation such as generation of the over-current to be used, and in general, the protection circuit includes a fuse element irreversibly disconnecting a line in which a charge or discharge current flows when the over-current is generated. However, when malfunction of the fuse element occurs, an internal pressure of the lithium secondary battery configuring a battery module and/or a battery pack, that is, a battery cell may be continuously increased, causing a risk of ignition or explosion, or the like. Therefore, there is a need to more clearly block a current flow to secure safety at the time of an increase in internal pressure of the battery cell.

US 2012/040235 discloses a pouch-type secondary battery having improved safety, and a battery pack including the pouch-type secondary battery. When inner pressure of a pouch is increased by an over-discharge, the pouch is deformed to separate electrode leads from electrode tabs. US 2015/072185 discloses an electrode lead for electrically connecting an electrode assembly provided inside a case of a secondary battery with the outside of the case that comprises an inner lead which is inserted between sealing parts of the case and to which an electrode tab of the electrode assembly is attached, and which has a gas flow path so as to allow gas to flow between the inside and the outside of the case, and an external lead which is insertably disposed in the gas flow path, is electrically connected with the inner lead when inserted into the gas flow path, seals one end of the gas flow path, and is separated from the gas flow path so as to cut off electrical connection with the inner lead when the pressure of the gas flowing into the gas flow path is greater than or equal to the predetermined pressure.

### SUMMARY

The present disclosure has been made to solve the above-mentioned problems occurring in the prior art while advantages achieved by the prior art are maintained intact.

First, an aspect of the present disclosure provides an electrode lead capable of automatically blocking a current applied to a battery cell at the time of overcharge of the battery cell.

Second, an aspect of the present disclosure provides an electrode lead capable of mechanically operating without a separate power source or a control part to block a current applied to a battery cell.

Third, an aspect of the present disclosure provides an electrode lead capable of having a current blocking function and being integrally manufactured.

Fourth, an aspect of the present disclosure provides a battery cell capable of minimizing a path through which a current flows to decrease resistance.

Fifth, an aspect of the present disclosure provides a battery cell capable of more easily setting an operation voltage at which a current blocking function is operated.

According to an exemplary embodiment of the present disclosure, a battery cell is provided that may include: an electrode assembly, a pouch case that accommodates the electrode assembly therein; and an electrode lead including an outer lead that protrudes outside the pouch case and an inner lead disposed between the outer lead and the electrode assembly, accommodated in the pouch case, and cut by tension applied when the pouch case is expanded.

According to another exemplary embodiment of the present disclosure, a battery cell is provided that may include: an electrode assembly, a pouch case that accommodates the electrode assembly therein; and an electrode lead including an outer lead that protrudes outside the pouch case and an inner lead disposed between the outer lead and the electrode assembly and accommodated in the pouch case, wherein the inner lead is disposed between first and second surfaces of the pouch case when the inner lead is bent in a 'S' shape, coupled to the first and second surfaces by a pouch adhesive layer, respectively, and includes a weak part provided to be fractured by tension applied to the inner lead when the pouch case is expanded. Details of exemplary embodiments will be described below with reference to the accompanying drawings.

### BRIEF DESCRIPTION OF THE DRAWINGS

The above and other objects, features and advantages of the present disclosure will be more apparent from the following detailed description taken in conjunction with the accompanying drawings.
FIG. 1 is a plan view of a battery cell according to a first exemplary embodiment of the present disclosure;
FIG. 2 is a plan view illustrating a state before an electrode lead illustrated in FIG. 1 is assembled according to an exemplary embodiment of the present disclosure;
FIG. 3 is a rear view illustrating the state before the electrode lead illustrated in FIG. 1 is assembled according to an exemplary embodiment of the present disclosure;
FIG. 4 is a plan view illustrating a state in which the electrode lead and a pouch case illustrated in FIG. 1 are coupled to each other according to an exemplary embodiment of the present disclosure;
FIG. 5A is a cross-sectional view taken along line A-A of FIG. 4, illustrating a state in which the battery cell illustrated in FIG. 1 is normal according to an exemplary embodiment of the present disclosure;
FIG. 5B is a cross-sectional view taken along line A-A of FIG. 4, illustrating a state in which the battery cell illustrated in FIG. 1 is expanded and thus the electrode lead is cut according to an exemplary embodiment of the present disclosure;
FIG. 5C is a cross-sectional view taken along line A-A of FIG. 4, illustrating a state in which the battery cell illustrated in FIG. 1 is contracted after being expanded according to an exemplary embodiment of the present disclosure;
FIG. 6 is a plan view of a battery cell according to a second exemplary embodiment of the present disclosure;
FIG. 7 is a plan view illustrating a state before an electrode lead illustrated in FIG. 6 is assembled according to an exemplary embodiment of the present disclosure;
FIG. 8 is a rear view illustrating the state before the electrode lead illustrated in FIG. 6 is assembled according to an exemplary embodiment of the present disclosure;
FIG. 9A is a cross-sectional view taken along line B-B of FIG. 6, illustrating a state in which the battery cell illustrated in FIG. 6 is normal according to an exemplary embodiment of the present disclosure;
FIG. 9B is a cross-sectional view taken along line B-B of FIG. 6, illustrating a state in which the battery cell illustrated in FIG. 6 is expanded and thus the electrode lead is cut according to an exemplary embodiment of the present disclosure;
FIG. 9C is a cross-sectional view taken along line B-B of FIG. 6, illustrating a state in which the battery cell illustrated in FIG. 6 is contracted after being expanded according to an exemplary embodiment of the present disclosure;
FIG. 10 is a plan view of a battery cell according to a third exemplary embodiment of the present disclosure.
FIG. 11 is a plan view illustrating a state before an electrode lead illustrated in FIG. 10 is assembled according to an exemplary embodiment of the present disclosure;
FIG. 12A is a cross-sectional view taken along line C-C of FIG. 10, illustrating a state in which the battery cell illustrated in FIG. 10 is normal according to an exemplary embodiment of the present disclosure;
FIG. 12B is a cross-sectional view taken along line C-C of FIG. 10, illustrating a state in which the battery cell illustrated in FIG. 10 is expanded and thus the electrode lead is cut according to an exemplary embodiment of the present disclosure;
FIG. 12C is a cross-sectional view taken along line C-C of FIG. 10, illustrating a state in which the battery cell illustrated in FIG. 10 is contracted after being expanded according to an exemplary embodiment of the present disclosure;
FIG. 13 is a plan view of a battery cell according to a fourth exemplary embodiment of the present disclosure;
FIG. 14 is a plan view illustrating a state before an electrode lead illustrated in FIG. 13 is assembled according to an exemplary embodiment of the present disclosure;
FIG. 15A is a cross-sectional view taken along line D-D of FIG. 13, illustrating a state in which the battery cell illustrated in FIG. 13 is normal according to an exemplary embodiment of the present disclosure;
FIG. 15B is a cross-sectional view taken along line D-D of FIG. 13, illustrating a state in which the battery cell illustrated in FIG. 13 is expanded and thus the electrode lead is cut according to an exemplary embodiment of the present disclosure;
FIG. 15C is a cross-sectional view taken along line D-D of FIG. 13, illustrating a state in which the battery cell illustrated in FIG. 13 is contracted after being expanded according to an exemplary embodiment of the present disclosure;
FIG. 16 is a plan view of a battery cell according to a fifth exemplary embodiment of the present disclosure;
FIG. 17 is a plan view illustrating a state before an electrode lead illustrated in FIG. 16 is assembled according to an exemplary embodiment of the present disclosure;
FIG. 18A is a cross-sectional view taken along line E-E of FIG. 16, illustrating a state in which the battery cell illustrated in FIG. 16 is normal according to an exemplary embodiment of the present disclosure;
FIG. 18B is a cross-sectional view taken along line E-E of FIG. 16, illustrating a state in which the battery cell illustrated in FIG. 16 is expanded and thus the electrode lead is cut according to an exemplary embodiment of the present disclosure;
FIG. 18C is a cross-sectional view taken along line E-E of FIG. 16, illustrating a state in which the battery cell illustrated in FIG. 16 is contracted after being expanded according to an exemplary embodiment of the present disclosure;
FIG. 19 is a plan view of a battery cell according to a sixth exemplary embodiment of the present disclosure;
FIG. 20 is a plan view illustrating a case in which the sixth exemplary embodiment of the present disclosure is applied to a battery cell in which a plurality of electrode leads are formed on one side of an electrode assembly according to an exemplary embodiment of the present disclosure;
FIG. 21A is a cross-sectional view taken along line F-F of FIG. 19, illustrating a state in which the battery cell illustrated in FIG. 19 is normal according to an exemplary embodiment of the present disclosure;
FIG. 21B is a cross-sectional view taken along line F-F of FIG. 19, illustrating a state in which the battery cell illustrated in FIG. 19 is expanded and thus the electrode lead is cut according to an exemplary embodiment of the present disclosure; and
FIG. 21C is a cross-sectional view taken along line F-F of FIG. 19 , illustrating a state in which the battery cell illustrated in FIG. 19 is contracted after being expanded according to an exemplary embodiment of the present disclosure.

### DETAILED DESCRIPTION

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

Although exemplary embodiment is described as using a plurality of units to perform the exemplary process, it is understood that the exemplary processes may also be performed by one or plurality of modules. Additionally, it is understood that the term controller/control unit refers to a hardware device that includes a memory and a processor. The memory is configured to store the modules and the processor is specifically configured to execute said modules to perform one or more processes which are described further below.

Advantages and features of the present disclosure and methods to achieve them will be elucidated from exemplary embodiments described below in detail with reference to the accompanying drawings. However, the present disclosure is not limited to the exemplary embodiment disclosed herein but will be implemented in various forms. The exemplary embodiments make disclosure of the present disclosure thorough and are provided so that those skilled in the art can easily understand the scope of the present disclosure. Therefore, the present disclosure will be defined by the scope of the appended claims. Like reference numerals throughout the specification denote like elements.

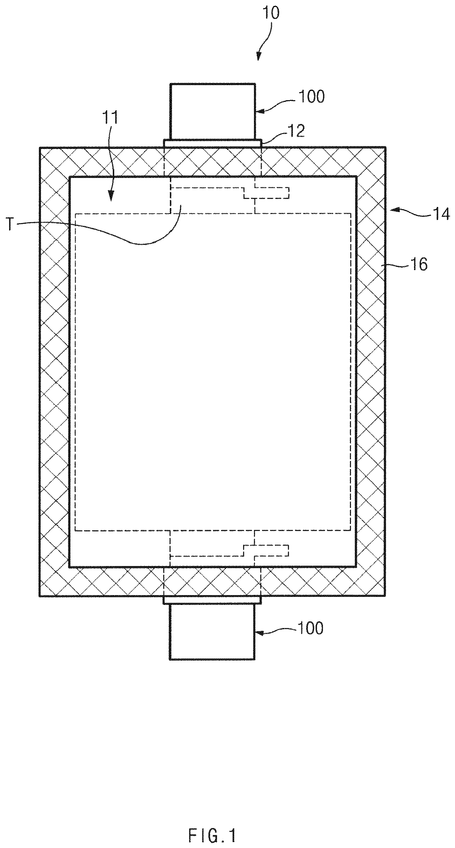

Hereinafter, battery cells according to exemplary embodiments of the present disclosure will be described with reference to the accompanying drawings. FIG. 1 is a plan view of a battery cell according to a first exemplary embodiment of the present disclosure. Referring to FIG. 1, the battery cell 10 may include an electrode assembly 11, a pair of electrode leads 100, an insulating film 12, and a pouch case 14.

The electrode assembly 11 may include a cathode plate, an anode plate, a separator, and an electrode tap T. The electrode assembly 11 may be a stack type electrode assembly formed by interposing the separator between stacked cathode and anode plates. Further, the electrode assembly 11 may be formed in a jelly-roll form. The cathode plate may be formed by applying a cathode active material on a current collector plate made of an aluminum (Al) material. Further, the anode plate may be formed by applying an anode active material on a current collector plate made of a copper (Cu) material.

The electrode tap T, formed integrally with an electrode plate, that is, the cathode plate or anode plate, corresponds to a non-coated region of the electrode plate on which an electrode active material is not applied. In other words, the electrode tap T may include a cathode tap that corresponds to a region of the cathode plate on which the cathode active material is not applied and an anode tap that corresponds to a region of the anode plate on which the anode active material is not applied. The electrode lead 100, which is a thin plate-shaped metal, may be attached to the electrode tap T to be extended in an outward direction of the electrode assembly 11. The electrode lead 100 may include a cathode lead attached to the cathode tap and an anode lead attached to the anode tap. The cathode and anode leads may be extended in the same direction as each other or in opposite directions to each other based on formation positions of the cathode and anode taps.

The insulating film 12, attached to a circumference of the electrode lead 100 in a width direction to be interposed between the electrode lead 100 and an inner surface of the pouch case 14, may be made of a film having an insulation property and thermal bondability. The insulating film 12 may be formed of, for example, a layer (e.g., single layer or multiple layer) of any one or more materials selected from polyimide (PI), polypropylene (PP), polyethylene (PE), polyethylene terephthalate (PET), and the like. The insulating film 12 may prevent a short-circuit from occurring between the electrode lead 100 and a metal layer of the pouch case 14. In addition, the insulating film 12 may improve sealing power of the pouch case 14 in a region in which the electrode lead 100 is led.

In other words, since the electrode lead 100 made of a metal plate and the inner surface of the pouch case 14 are not appropriately adhered to each other, even though an edge region 16 of the pouch case 14 is sealed by thermal bonding, a sealing property in the region in which the electrode lead 100 is led may be deteriorated. Further, the sealing property deterioration phenomenon as described above is more prominent when nickel (Ni) is coated on a surface of the electrode lead 100. Therefore, the sealing property of the battery cell 10 may be improved by interposing the insulating film 12 between the electrode lead 100 and the inner surface of the pouch case 14.

The pouch case 14 may be sealed by thermal bonding of the edge region 16 in which first and second surfaces 14a and 14b contact each other when the electrode assembly 11 is accommodated therein to lead the electrode lead 100 to the outside. The pouch case 14 as described above may have a multilayer structure to maintain an improved thermal bondability and secure rigidity for maintaining a shape and protecting the electrode assembly 11 and the insulation property. For example, the pouch case 14 may have a multilayer structure including a first layer positioned at an innermost portion thereof to face the electrode assembly 11, a second layer positioned at an outermost portion thereof to be directly exposed to an external environment, and a third layer interposed between the first and second layers.

In particular, the first layer may be made of a material having corrosion resistance against to an electrolyte solution, an insulation property, and thermal bondability such as polypropylene (PP), the second layer may be made of a material having rigidity for maintaining the shape and the insulation property such as polyethylene terephthalate (PET), and the third layer may be made of a metal material such as aluminum (Al). In an abnormal situation in which a short-circuit, overcharge, or the like, occurs in the battery cell 10, gas may be generated in the cell. Accordingly, the pouch case 14 may expand due to the gas, and when the abnormal situation is not resolved, the pouch case 14 may explode.

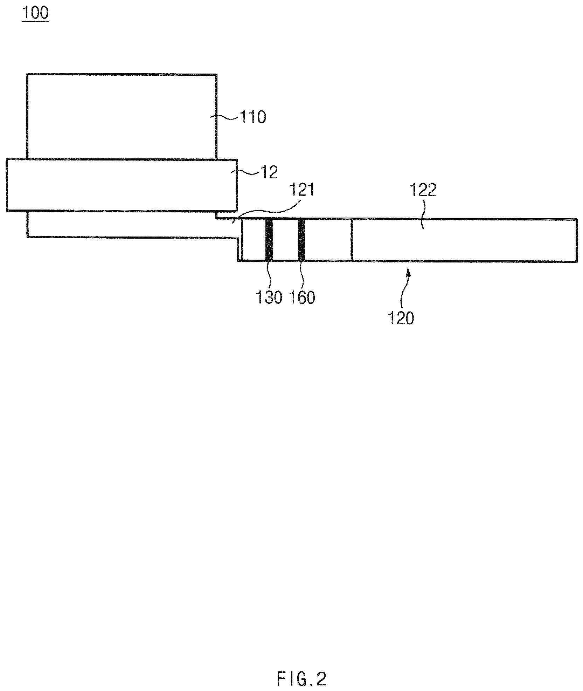

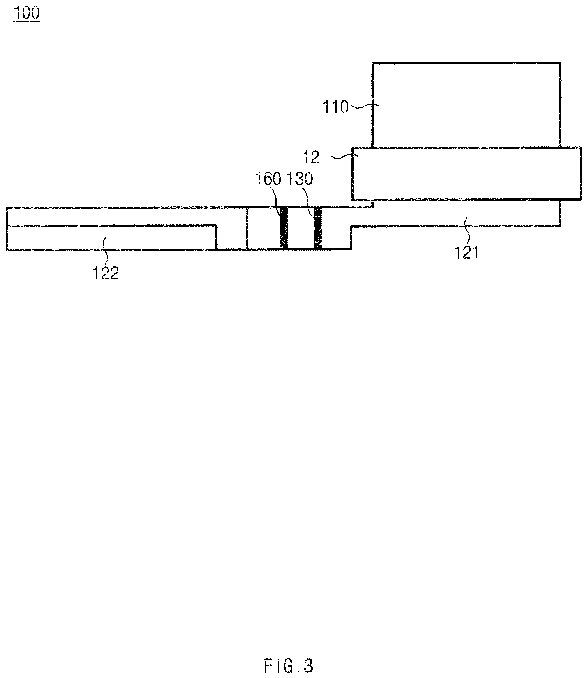

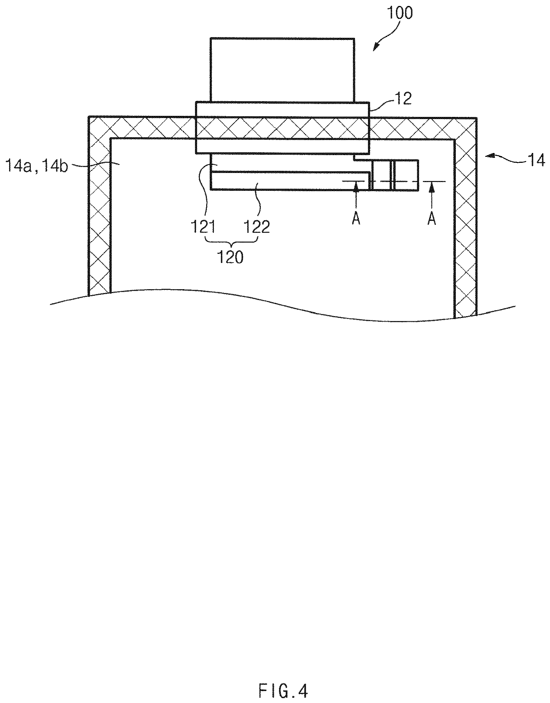

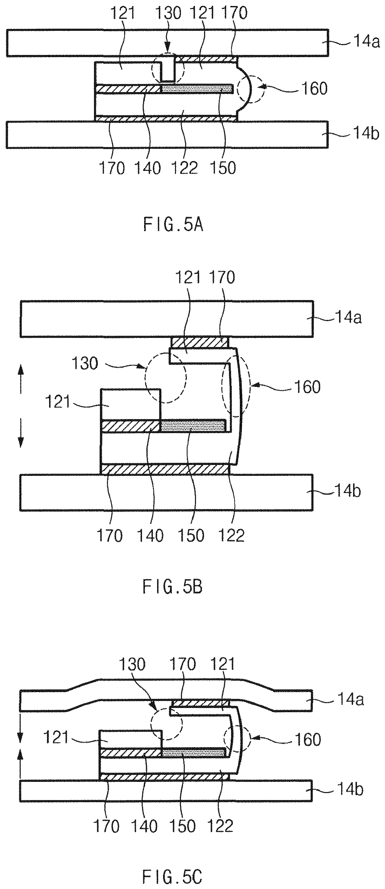

FIG. 2 is a plan view illustrating a state before the electrode lead illustrated in FIG. 1 is assembled, FIG. 3 is a rear view illustrating the state before the electrode lead illustrated in FIG. 1 is assembled, and FIG. 4 is a plan view illustrating a state in which the electrode lead and the pouch case illustrated in FIG. 1 are coupled to each other. FIG. 5A is a cross-sectional view taken along line A-A of FIG. 4, illustrating a state in which the battery cell illustrated in FIG. 1 is normal, FIG. 5B is a cross-sectional view taken along line A-A of FIG. 4, illustrating a state in which the battery cell illustrated in FIG. 1 is expanded and thus the electrode lead is cut, and FIG. 5C is a cross-sectional view taken along line A-A of FIG. 4, illustrating a state in which the battery cell illustrated in FIG. 1 is contracted after being expanded.

Referring to FIGS. 2 to 4, the battery cell 10 according to the first exemplary embodiment of the present disclosure may include: the electrode assembly 11; the pouch case 14 that accommodates the electrode assembly 11 therein; and the electrode lead 100 including an outer lead 110 that protrudes outside the pouch case 14 and an inner lead 120 disposed between the outer lead 110 and the electrode assembly 11, accommodated in the pouch case 14, and cut by tension applied when the pouch case 14 is expanded.

The battery cell 1 0 according to the first exemplary embodiment of the present disclosure may include: the electrode assembly 11; the pouch case 14 that accommodates the electrode assembly 11 therein; and the electrode lead 100 including an outer lead 110 that protrudes outside the pouch case 14 and an inner lead 120 disposed between the outer lead 110 and the electrode assembly 11, accommodated in the pouch case 14, having a notch formed therein, and having a first side coupled to the pouch case 14 and a second side separated from the pouch case 14 based on the notch. The pouch case 14 may be formed of the first and second surfaces 14a and 14b facing each other, and the inner lead 120 may include a first inner lead 121 connected to the outer lead 110 and coupled to the first surface 14a; and a second inner lead 122 connected to the first inner lead 121, coupled to the second surface 14b, and connected to the electrode assembly 11. At least one of the first and second inner leads 121 and 122 may be formed of a plastic material that is plastically deformed by expansion of the pouch case 14.

A pouch adhesive layer 170 that adheres the pouch case 14 and the inner lead 120 to each other may be formed in at least one of a space between the first surface 14a and the first inner lead 121 and a space between the second surface 14b and the second inner lead 122. For example, as illustrated in FIG. 5A, the pouch adhesive layer 170 may be formed between some region of the first inner lead 121 adjacent to a bending part 160 to be described below and the first surface 14a and between the second inner lead 122 and the second surface 14b. In particular, as illustrated in FIG. 5A, an empty space in which the pouch adhesive layer 170 is not interposed may be formed between the first inner lead 121 and the first surface 14a. The inner lead 120 may include a weak part 130 formed in a portion that is not coupled to the pouch case 14 by the pouch adhesive layer 170 and having high brittleness compared to other portions of the inner lead 120. For example, as illustrated in FIG. 5A, the weak part may be formed in a portion of the first inner lead 121 corresponding to the empty space formed between the first inner lead 121 and the first surface 14a.

Furthermore, the notch may be formed in the weak part 130 and may have a groove shape or have apertures formed at a predetermined interval. The notch promotes fracture of the electrode lead 100. The first and second inner leads 121 and 122 may be disposed to overlap each other as illustrated in FIG. 5A. A lead adhesive layer 140 having an insulating and adhesive ingredient may be formed between the first and second inner leads 121 and 122. For example, as illustrated in FIG. 5A, the lead adhesive layer 140 may be formed between a portion of the first inner lead 121 that is not attached to the first surface 14a by the pouch adhesive layer 170 and not provided with the weak part 130 and the second inner lead 122.

An insulator 150 that insulates the first and second inner leads 121 and 122 from each other may be disposed between the first and second inner leads 121 and 122. For example, the insulator 150 may be disposed in a portion in which the lead adhesive layer 140 is not provided in a region between the first and second inner leads 121 and 122, as illustrated in FIG. 5A. In particular, the lead adhesive layer 140 may be disposed at a first side and the insulator 150 may be disposed at a second side based on the weak part 130 between the first and second inner leads 121 and 122.

The inner lead 120 may further include the bending part 160 that connects the first and second inner leads 121 and 122 and thus, the first and second inner leads 121 and 122 may be integrated with each other. The bending part 160 may be bent with a first end of the first inner lead 121 attached to the first surface 14a by the pouch adhesive layer 170 and a second end of the second inner lead 122 attached to the second surface 14b by the pouch adhesive layer 170 connected to each other, and the first and second inner leads 121 and 122 may be disposed to overlap each other, as illustrated in FIG. 5A. An inner surface of the bending part 160 may be disposed to face the insulator 150.

Referring to FIG. 5A, when the battery cell 10 operates normally with no gas in the battery cell 10, a state in which the first and second inner leads 121 and 122 overlap each other may be maintained. However, when the battery cell 10 starts to be filled with gas due to overcharge as illustrated in FIG. 5B, the pouch case 14 may expand, and the first and second surfaces 14a and 14b may move away from each other (e.g., may be spaced apart). In particular, as illustrated in FIG. 5B, the first inner lead 121 may move together with the first surface 14a and the second inner lead 122 may move together with the second surface 14b by the pouch adhesive layer 170. At the same time, as illustrated in FIG. 5B, the bending part 160 may be bent to be opened to space the first and second inner leads 121 and 122 apart from each other.

However, a first portion of the first inner lead 121 may be attached to the first surface 14a by the pouch adhesive layer 170, and a second portion of the first inner lead 121 may be attached to the second inner lead 122 by the lead adhesive layer 140. Therefore, a first portion of the first inner lead 121 may move together with the first surface 14a, a second portion of the first inner lead 121 may move together with the second surface 14b. In other words, when the pouch case 14 expands, the first portion of the first inner lead 121 and the second portion of the first inner lead 121 may move in opposite directions to each other. Particularly, the weak part 130 formed between the first portion of the first inner lead 121 and the second portion of the first inner lead 121 may be fractured by tension, that is, fracture force, applied to the weak part 130 when the pouch case 14 expands. Therefore, functions of the first and second inner leads 121 and 122 as conducting wires may be lost by the fracture of the weak part 130 as described above, and a current passing through the electrode lead 100 may be blocked.

Thereafter, as illustrated in FIG. 5C, even though the pouch case 14 is contracted, an opened shape of the electrode lead 100 made of the plastic material may be maintained as it is. Therefore, even though an abnormal state is terminated, an over-current does not flow to the electrode assembly 11 again, and usage safety of the battery cell 1 0 may be secured. Although a case in which the weak part 130 and the bending part 160 are separately formed is illustrated in FIGS. 2 to 5C, the weak part 130 may be formed in the bending part 160. In particular, an end portion of the pouch adhesive layer 170 may serve as a hinge axis.

Meanwhile, although not separately illustrated, the insulator 150 may be omitted, and the first and second inner leads 121 and 122 may be bonded to each other by a compression method. For example, the first and second inner leads 121 and 122 may be seated from the weak part 130 to the bending part 160 to be conductively bonded. In particular, a current flowing through the weak part 130 does not flow toward the bending part 160 but directly flows toward the second inner lead 122. A length of a conducting wire may decrease due to absence of the insulator 150. In other words, since a current path decrease, resistance may decrease.

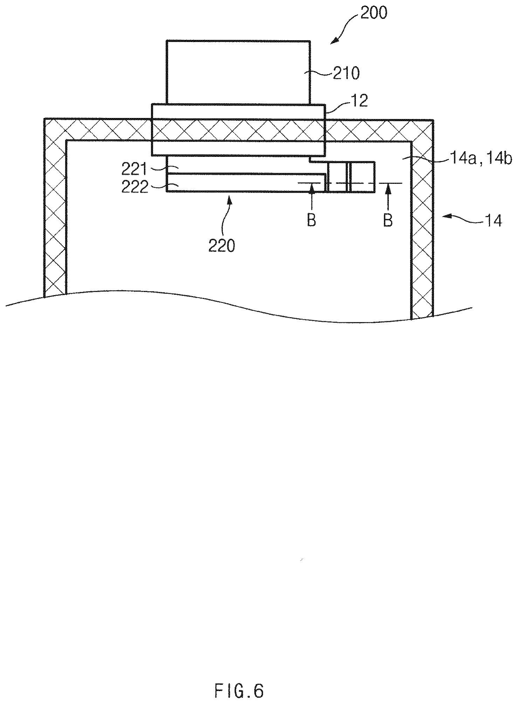

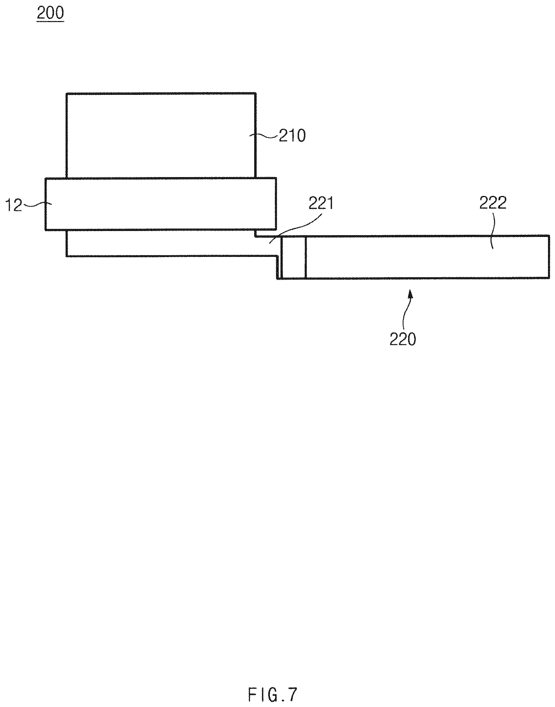

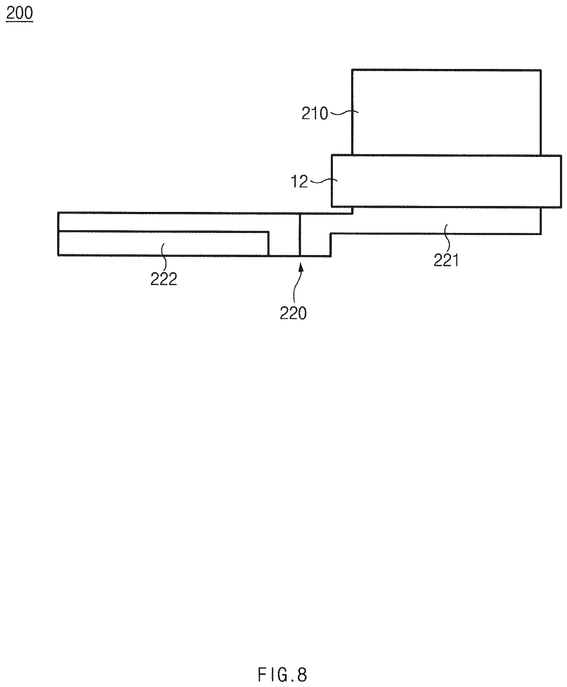

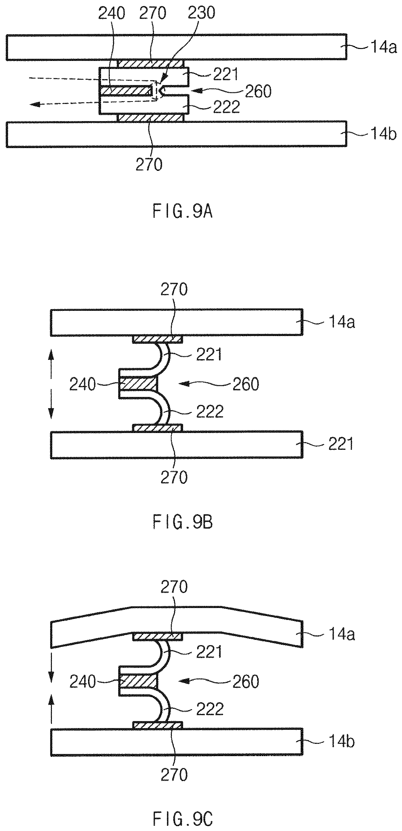

FIG. 6 is a plan view of a battery cell according to a second exemplary embodiment of the present disclosure, FIG. 7 is a plan view illustrating a state before an electrode lead illustrated in FIG. 6 is assembled, and FIG. 8 is a rear view illustrating the state before the electrode lead illustrated in FIG. 6 is assembled. FIG. 9A is a cross-sectional view taken along line B-B of FIG. 6, illustrating a state in which the battery cell illustrated in FIG. 6 is normal, FIG. 9B is a cross-sectional view taken along line B-B of FIG. 6, illustrating a state in which the battery cell illustrated in FIG. 6 is expanded and thus the electrode lead is cut, and FIG. 9C is a cross-sectional view taken along line B-B of FIG. 6, illustrating a state in which the battery cell illustrated in FIG. 6 is contracted after being expanded.

Referring to FIGS. 6 to 8, the battery cell 10 according to the second exemplary embodiment of the present disclosure may include: an electrode assembly 11; a pouch case 14 that accommodates the electrode assembly 11 therein; and an electrode lead 200 including an outer lead 210 that protrudes outside the pouch case 14 and an inner lead 220 disposed between the outer lead 210 and the electrode assembly 11, accommodated in the pouch case 14, and cut by tension applied when the pouch case 14 is expanded.

The battery cell 10 according to the second exemplary embodiment of the present disclosure may include: the electrode assembly 11; the pouch case 14 that accommodates the electrode assembly 11 therein; and the electrode lead 200 including the outer lead 210 that protrudes outside the pouch case 14 and the inner lead 220 disposed between the outer lead 210 and the electrode assembly 11 and accommodated in the pouch case 14, wherein the inner lead 220 may include first and second inner leads 221 and 222 coupled to the pouch case 14, respectively, and overlapping each other. The pouch case 14 may have first and second surfaces 14a and 14b facing each other. The inner lead 220 may include the first inner lead 221 connected to the outer lead 210 and coupled to the first surface 14a; the second inner lead 222 connected to the electrode assembly 11 and coupled to the second surface 14b; a bending part 260 connecting the first and second inner leads 221 and 222 to each other; and a weak part 230 formed in the bending part 260.

Pouch adhesive layers 270 that adhere the pouch case 14 and the inner lead 220 to each other may be formed between the first surface 14a and the first inner lead 221 and between the second surface 14b and the second inner lead 222, respectively. The first and second inner leads 221 and 222 may overlap each other as illustrated in FIG. 9A. At least one of the first and second inner leads 221 and 222 may be formed of a plastic material plastically deformed by expansion of the pouch case 14. A lead adhesive layer 240 having an insulating and adhesive ingredient may be formed between the first and second inner leads 221 and 222.

As illustrated in FIG. 9A, the bending part 260 may connect a first end of the first inner lead 221 and a first of the second inner lead 222 to integrate the first and second inner leads 221 and 222 with each other, and the bending part 260 may be bent to overlap the first and second inner leads 221 and 222. An inner surface of the bending part 260 may be disposed to face the lead adhesive layer 240. The weak part 230 may be provided in an outer surface of the bending part 260 as illustrated in FIG. 9A. A notch may be formed in the weak part 230 and may have a groove shape or may include apertures formed at a predetermined interval. The notch promotes fracture of the electrode lead 200.

Referring to FIG. 9A, when the battery cell 10 operates normally, since there is no gas in the battery cell 10, a state in which the first and second inner leads 221 and 222 overlap each other may be maintained. However, when the battery cell 10 starts to be filled with gas due to overcharge, the pouch case 14 may expand, and the first and second surfaces 14a and 14b may move apart (e.g., may become spaced apart). In particular, as illustrated in FIG. 9B, the first inner lead 221 may move together with the first surface 14a and the second inner lead 222 may move together with the second surface 14b by the pouch adhesive layer 270. Therefore, as illustrated in FIG. 9B, the bending part 260 may be bent to be opened and thus, the first and second inner leads 221 and 222 may be spaced apart from each other, and the weak part 230 may be fractured by tension, that is, fracture force, applied to the weak part 230 while the bending part 260 is opened. Therefore, functions of the first and second inner leads 221 and 222 as conducting wires may be lost by the fracture of the weak part 230 as described above, and a current passing through the electrode lead 200 may be blocked.

Thereafter, as illustrated in FIG. 9C, even though the pouch case 14 is contracted, an opened shape of the electrode lead 200 made of the plastic material may be maintained as it is. Therefore, even though an abnormal state is terminated, an over-current does not flow to the electrode assembly 11 again, and usage safety of the battery cell 10 may be secured. Meanwhile, since in the electrode lead 200 according to the second exemplary embodiment of the present disclosure, the weak part 230 may be formed in a connection point of the first and second inner leads 221 and 222, a separate insulator may be omitted and thus, a length of a conducting wire may be decreased due to absence of the insulator. In other words, since a current path is decreased, resistance may be decreased.

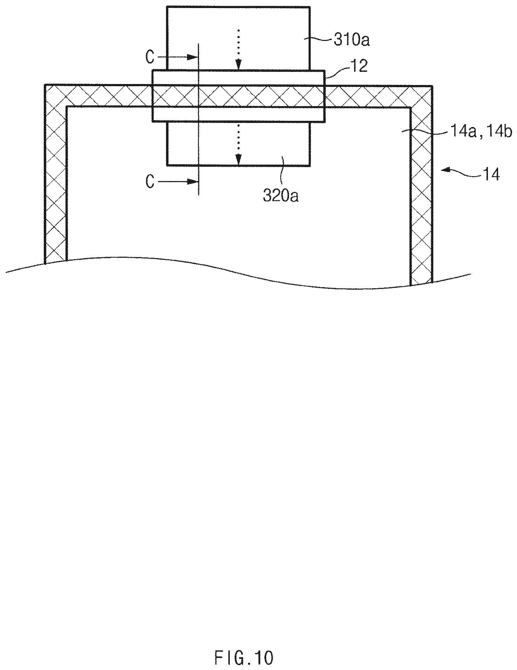

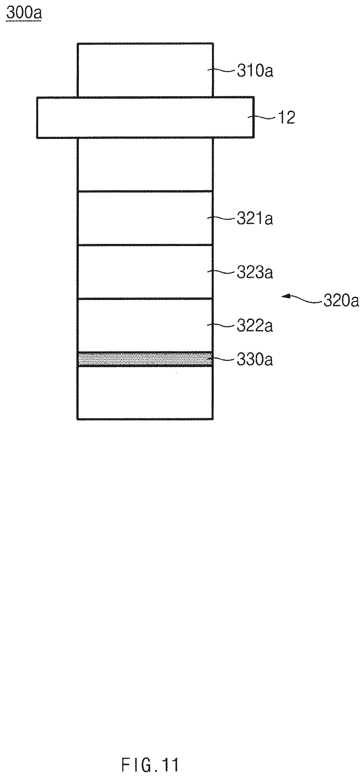

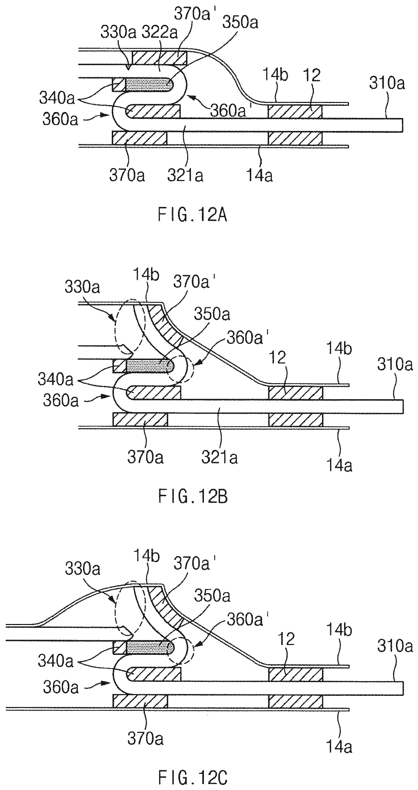

FIG. 10 is a plan view of a battery cell according to a third exemplary embodiment of the present disclosure, and FIG. 11 is a plan view illustrating a state before an electrode lead illustrated in FIG. 10 is assembled. FIG. 12A is a cross-sectional view taken along line C-C of FIG. 10, illustrating a state in which the battery cell illustrated in FIG. 10 is normal, FIG. 12B is a cross-sectional view taken along line C-C of FIG. 10, illustrating a state in which the battery cell illustrated in FIG. 10 is expanded and thus the electrode lead is cut, and FIG. 12C is a cross-sectional view taken along line C-C of FIG. 10, illustrating a state in which the battery cell illustrated in FIG. 10 is contracted after being expanded.

Referring to FIGS. 10 and 11, the battery cell 10 according to the third exemplary embodiment of the present disclosure may include: an electrode assembly 11; a pouch case 14 that accommodates the electrode assembly 11 therein; and an electrode lead 300a including an outer lead 310a that protrudes outside the pouch case 14 and an inner lead 320a disposed between the outer lead 310a and the electrode assembly 11, accommodated in the pouch case 14, disposed in parallel with a straight line (not illustrated) connecting the electrode assembly 11 and the outer lead 310a at a shortest distance, and cut by expansion force of the pouch case 14.

The battery cell 10 according to the third exemplary embodiment of the present disclosure may include: the electrode assembly 11; the pouch case 14 that accommodates the electrode assembly 11 therein; and the electrode lead 300a including the outer lead 310a that protrudes outside the pouch case 14 and the inner lead 320a disposed between the outer lead 310a and the electrode assembly 11 and accommodated in the pouch case 14. The inner lead 320a may be coupled to first and second surfaces 14a and 14b of the pouch case 14 and bent in a 'S' shape.

The inner lead 320a may include a first inner lead 321a connected to the outer lead 310a and coupled to the first surface 14a; a second inner lead 322a coupled to the second surface 14b and connected to the electrode assembly 11; an intermediate lead 323a disposed between the first and second inner leads 321a and 322a; bending parts 360a and 360a' that connect the first inner lead 321a and the intermediate lead 323a to each other and that connect the second inner lead 322a and the intermediate lead 323a to each other, respectively; and a weak part 330a provided in the second inner lead 322a.

As illustrated in FIG. 12A, the bending parts 360a and 360a' may be bent with the first inner lead, the intermediate lead, and the second inner lead 321a, 323a, and 322a disposed to overlap each other, thus forming the inner lead 320a as an 'S' shape. At least a portion of the inner lead 320a may be made of a plastic material plastically deformed by expansion of the pouch case 14. Pouch adhesive layers 370a and 370a' that adhere the pouch case 14 and the inner lead 320a to each other may be formed between the first surface 14a and the first inner lead 321a and between the second surface 14b and the second inner lead 322a, respectively.

A lead adhesive layer 340a having an insulation property and an adhesive property may be disposed in one of a space between the first inner lead 321a and the intermediate lead 323a and a space between the second inner lead 322a and the intermediate lead 323a, and an insulator 350a having an insulation property without an adhesive property is disposed in the other of the spaces. For example, as illustrated in FIG. 12A, the lead adhesive layer 340a may be disposed between the first inner lead 321a and the intermediate lead 323a, and the insulator 350a may be disposed between the intermediate lead 323a and the second inner lead 322a. However, as illustrated in FIG. 12A, the lead adhesive layer 340a may be disposed between another portion of the second inner lead 322a positioned toward the electrode assembly 11 compared to a first portion of the second inner lead 322a attached to the second surface 14b by the pouch adhesive layer 370a and a first portion of the intermediate lead 323a provided with the bending part 360a. In other words, the first portion of the second inner lead 322a may not be attached to the intermediate lead 323a, and the second portion of the second inner lead 322a may be attached to the intermediate lead 323a.

As illustrated in FIG. 12A, the weak part 330a may be disposed between a first portion of the second inner lead 322a and a second portion of the second inner lead 322a. A notch may be formed in the weak part 330a and the notch may include a groove shape or apertures formed at a predetermined interval. The notch may promote fracture of the electrode lead 300a when the pouch case 14 expands. Referring to FIG. 12A, when the battery cell 10 operates normally, since there is no gas in the battery cell 10, a state in which the first inner lead, the second inner lead, and the intermediate lead 321a, 322a, and 323a overlap each other may be maintained. However, when the battery cell 10 starts to be filled with gas due to overcharge, the pouch case 14 may expand, and the first and second surfaces 14a and 14b may become spaced apart. In particular, as illustrated in FIG. 12B, the first inner lead 321a may move together with the first surface 14a and the second inner lead 322a may move together with the second surface 14b by the pouch adhesive layers 370a and 370a'.

As described above, a first portion of the second inner lead 322a and the intermediate lead 323a may be separated from each other by the insulator 350a, a second portion of the second inner lead 322a and the intermediate lead 323a may be coupled to each other by the lead adhesive layer 340a, and the first inner lead 321a and the intermediate lead 323a may be coupled to each other by the lead adhesive layer 340a. Therefore, the first portion of the second inner lead 322a may move together with the second surface 14b, and the second portion of the second inner lead 322a may move together with the first surface 14a. In other words, when the pouch case 14 expands, the first portion of the second inner lead 322a and the second portion of the second inner lead 322a may move in opposite directions to each other. Particularly, as illustrated in FIG. 12B, when the pouch case 14 expands, the bending part 360a' may be bent to be opened and thus, the portion of the second inner lead 322a and the intermediate lead 323a may be spaced apart from each other. At the same time, as illustrated in FIG. 12B, the weak part 330a disposed between the first portion of the second inner lead 322a and the second portion of the second inner lead 322a may be fractured by tension, that is, fracture force, applied when the pouch case 14 expands. Therefore, a function of the electrode lead 300a as a conducting wire may be lost by the fracture of the weak part 330a as described above, and a current passing through the electrode lead 300a may be blocked.

Thereafter, as illustrated in FIG. 12C, even though the pouch case 14 is contracted, an opened shape of the electrode lead 300a of which at least a portion is made of the plastic material may be maintained as it is. Therefore, even though an abnormal state is terminated, an over-current does not flow to the electrode assembly 11 again, and usage safety of the battery cell 10 may be secured. Meanwhile, although a case in which the electrode lead 300a is provided so that the second inner lead 322a is fractured when the pouch case 14 is expanded is described, the electrode lead 300a is not limited thereto. In other words, the electrode lead 300a may be provided in which the first inner lead 321a may be fractured when the pouch case 14 expands.

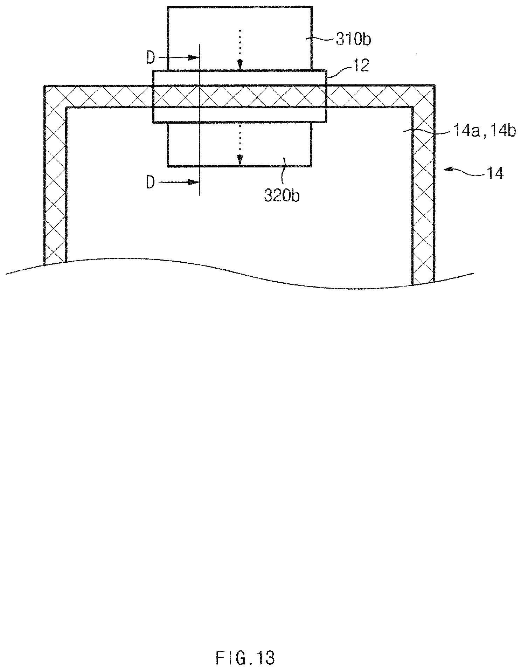

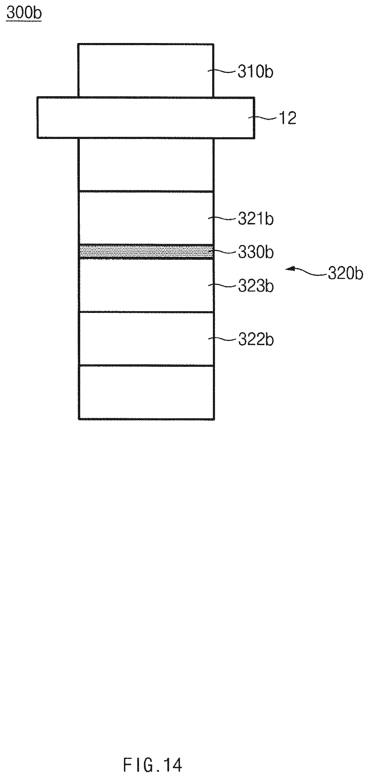

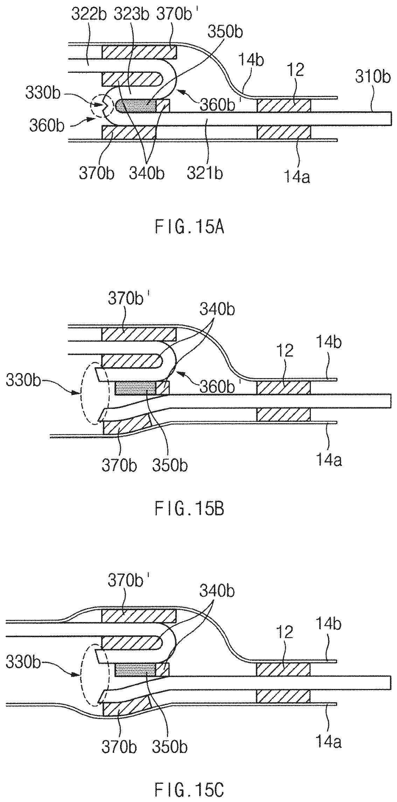

FIG. 13 is a plan view of a battery cell according to a fourth exemplary embodiment of the present disclosure, and FIG. 14 is a plan view illustrating a state before an electrode lead illustrated in FIG. 13 is assembled. FIG. 15A is a cross-sectional view taken along line D-D of FIG. 13, illustrating a state in which the battery cell illustrated in FIG. 13 is normal, FIG. 15B is a cross-sectional view taken along line D-D of FIG. 13, illustrating a state in which the battery cell illustrated in FIG. 13 is expanded and thus the electrode lead is cut, and FIG. 15C is a cross-sectional view taken along line D-D of FIG. 13, illustrating a state in which the battery cell illustrated in FIG. 13 is contracted after being expanded.

Referring to FIGS. 13 and 14, the battery cell 10 according to the fourth exemplary embodiment of the present disclosure may include: an electrode assembly 11; a pouch case 14 that accommodates the electrode assembly 11 therein; and an electrode lead 300b including an outer lead 310b that protrudes outside the pouch case 14 and an inner lead 320b disposed between the outer lead 310b and the electrode assembly 11, accommodated in the pouch case 14, disposed in parallel with a straight line (not illustrated) connecting the electrode assembly 11 and the outer lead 310b at a shortest distance, and cut by expansion force of the pouch case 14.

The battery cell 10 according to the fourth exemplary embodiment of the present disclosure may include: the electrode assembly 11; the pouch case 14 that accommodates the electrode assembly 11 therein; and the electrode lead 300b including the outer lead 310b that protrudes outside the pouch case 14 and the inner lead 320b disposed between the outer lead 310b and the electrode assembly 11 and accommodated in the pouch case 14. The inner lead 320b may be coupled to first and second surfaces 14a and 14b of the pouch case 14 and bent in a 'S' shape.

The inner lead 320b may include a first inner lead 321b connected to the outer lead 310b and coupled to the first surface 14a; a second inner lead 322b coupled to the second surface 14b and connected to the electrode assembly 11; an intermediate lead 323b disposed between the first and second inner leads 321b and 322b; bending parts 360b and 360b' that connect the first inner lead 321b and the intermediate lead 323b to each other and that connect the second inner lead 322b and the intermediate lead 323b to each other, respectively; and a weak part 330b disposed in the bending part 360b.

As illustrated in FIG. 15A, the bending parts 360b and 360b' may be bent with the first inner lead, the intermediate lead, and the second inner lead 321b, 323b, and 322b disposed to overlap each other, and the inner lead 320b may form an 'S' shape. At least a portion of the inner lead 320b may be made of a plastic material plastically deformed by expansion of the pouch case 14. Pouch adhesive layers 370b and 370b' that adhere the pouch case 14 and the inner lead 320b to each other may be formed between the first surface 14a and the first inner lead 321b and between the second surface 14b and the second inner lead 322b, respectively.

A lead adhesive layer 340b having an insulation property and an adhesive property may be disposed in one of a space between the first inner lead 321b and the intermediate lead 323b and a space between the second inner lead 322b and the intermediate lead 323b, and an insulator 350b having an insulation property without an adhesive property may be disposed in the other of the spaces. For example, as illustrated in FIG. 15A, the lead adhesive layer 340b may be disposed between the second inner lead 322b and the intermediate lead 323b, and the insulator 350b may be disposed between the intermediate lead 323b and the first inner lead 321b. However, as illustrated in FIG. 15A, the lead adhesive layer 340b may be disposed between a second portion of the first inner lead 321b positioned toward the outer lead 310b compared to a first portion of the first inner lead 321b attached to the first surface 14a by the pouch adhesive layer 370b and a first end portion of the intermediate lead 323b provided with the bending part 360b'. In other words, a first portion of the first inner lead 321b may not be attached to the intermediate lead 323b, and a second portion of the first inner lead 321b may be attached to the intermediate lead 323b.

The weak part 330b may be provided in the bending part 360b as illustrated in FIG. 15A. A notch may be formed in the weak part 330b and the notch may include a groove shape or apertures formed at a predetermined interval. The notch may promote fracture of the electrode lead 300b when the pouch case 14 expands. Referring to FIG. 15A, when the battery cell 10 operates normally, since there is no gas in the battery cell 10, a state in which the first inner lead, the second inner lead, and the intermediate lead 321b, 322b, and 323b overlap each other may be maintained. However, when the battery cell 10 starts to be filled with gas due to overcharge, the pouch case 14 may expand, and the first and second surfaces 14a and 14b may become spaced apart. In particular, as illustrated in FIG. 15B, the first inner lead 321b may move together with the first surface 14a and the second inner lead 322b may move together with the second surface 14b by the pouch adhesive layers 370b and 370b'.

As described above, a first portion of the first inner lead 321b and the intermediate lead 323b may be separated from each other by the insulator 350b, a second portion of the first inner lead 321b and the intermediate lead 323b may be coupled to each other by the lead adhesive layer 340b, and the second inner lead 322b and the intermediate lead 323b may be coupled to each other by the lead adhesive layer 340b. Therefore, the first portion of the first inner lead 321b may move together with the first surface 14a, and the second portion of the first inner lead 321b may move together with the second surface 14b. In other words, when the pouch case 14 expands, the first portion of the first inner lead 321b and the second portion of the first inner lead 321b may move in opposite directions to each other. In particular, as illustrated in FIG. 15B, when the pouch case 14 expands, the bending part 360b may be bent to be opened and thus, the first portion of the first inner lead 321b and the intermediate lead 323b may be spaced apart from each other. At the same time, as illustrated in FIG. 15B, the weak part 330b may be fractured by tension, that is, fracture force, applied when the bending part 360b is opened. Therefore, a function of the electrode lead 300b as a conducting wire may be lost by the fracture of the weak part 330b as described above, and a current passing through the electrode lead 300b may be blocked.

Thereafter, as illustrated in FIG. 15C, even though the pouch case 14 is contracted, an opened shape of the electrode lead 300b of which at least a portion is made of the plastic material may be maintained as it is. Therefore, even though an abnormal state is terminated, an over-current does not flow to the electrode assembly 11 again, and usage safety of the battery cell 10 may be secured. Meanwhile, although a case in which the electrode lead 300b is provided so that the bending part 360b is fractured when the pouch case 14 expands is described, the electrode lead 300b is not limited thereto. In other words, the electrode lead 300b may be provided with the bending part 360b' fractured when the pouch case 14 expands.

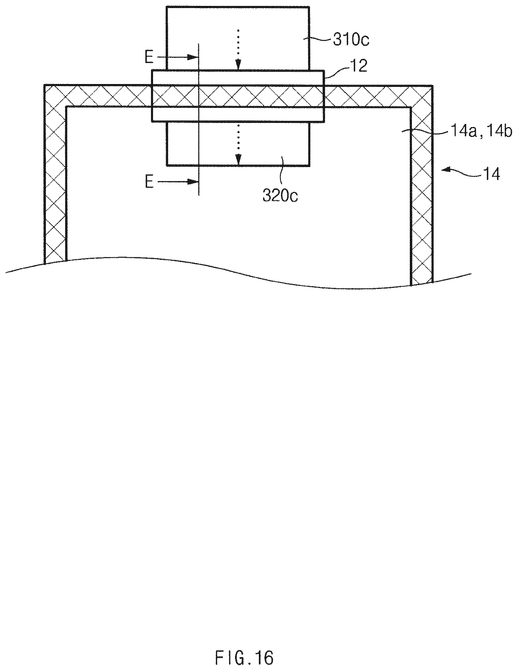

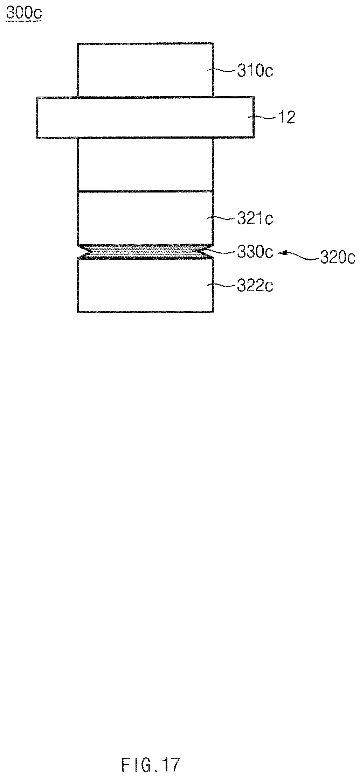

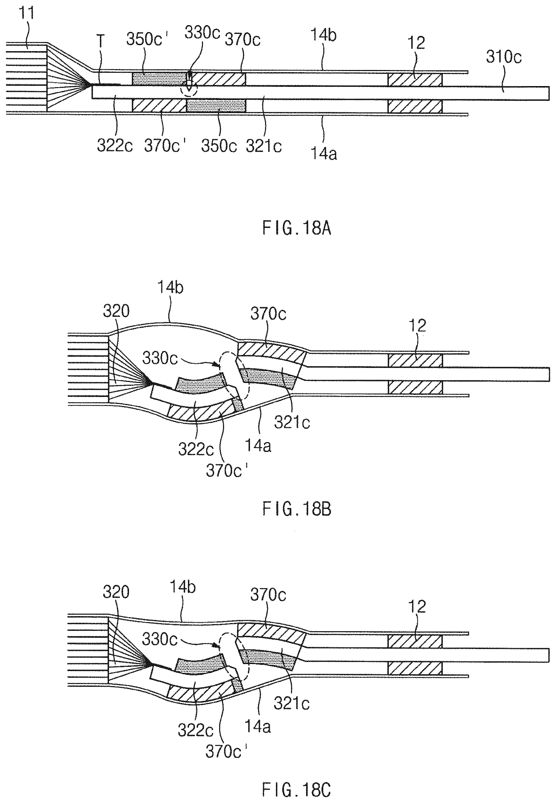

FIG. 16 is a plan view of a battery cell according to a fifth exemplary embodiment of the present disclosure, and FIG. 17 is a plan view illustrating a state before an electrode lead illustrated in FIG. 16 is assembled. FIG. 18A is a cross-sectional view taken along line E-E of FIG. 16, illustrating a state in which the battery cell illustrated in FIG. 16 is normal, FIG. 18B is a cross-sectional view taken along line E-E of FIG. 16, illustrating a state in which the battery cell illustrated in FIG. 16 is expanded and thus the electrode lead is cut, and FIG. 18C is a cross-sectional view taken along line E-E of FIG. 16, illustrating a state in which the battery cell illustrated in FIG. 16 is contracted after being expanded.

In the battery cell 1 0 according to the fifth exemplary embodiment of the present disclosure, an inner lead 320c may include a first inner lead 321c connected to an outer lead 310c; a second inner lead 322c electrically connected to an electrode tap T of an electrode assembly 11; and a weak part 330c disposed between the first and second inner leads 321c and 322c. As illustrated in FIG. 18A, the inner lead 320c may be formed to dispose the first and second inner leads 321c and 322c on a linear line. In other words, the inner lead 320c may be disposed in a pouch case 14 when the linear line is maintained without an overlapping section. The inner lead 320c as described above may minimize a length of a path through which a current flows to decrease resistance compared to the inner leads according to the second and third exemplary embodiments of the present disclosure described above. Further, at least a portion of the inner lead 320c may be made of a plastic material plastically deformed by expansion of the pouch case 14.

An insulator 350c having an insulation property without an adhesive property may be disposed between the first inner lead 321c and a first surface 14a, and a pouch adhesive layer 370c having an insulation property and an adhesive property may be disposed between the first inner lead 321c and a second surface 14b. The pouch adhesive layer 370c and the insulator 350c may be disposed to face each other with the first inner lead 321c interposed therebetween. In particular, the first inner lead 321c may be separated from the first surface 14a by the insulator 350c and coupled to the second surface 14b by the pouch adhesive layer 370c.

A pouch adhesive layer 370c' having the insulation property and the adhesive property may be disposed between the second inner lead 322c and the first surface 14a, and an insulator 350c' having the insulation property without the adhesive property may be disposed between the second inner lead 322c and the second surface 14b. Additionally, the pouch adhesive layer 370c' and the insulator 350c' may be disposed to face each other with the second inner lead 322c interposed therebetween. Particularly, the second inner lead 322c may be coupled to the first surface 14a by the pouch adhesive layer 370c' and may be separated from the second surface 14b by the insulator 350c'.

Meanwhile, a space between the inner lead 320c and the pouch case 14 may be different based on = the inner lead 320c due to disposition of the electrode tap T. In other words, the space between the pouch case 14 and the inner lead 320c may be narrow at a position at which the electrode tap T is disposed, and thus, deformation of an electrode lead 300c may be resisted. Therefore, the pouch adhesive layers 370c and 370c' and the insulators 350c and 350c' may be disposed to separate the electrode lead 300c from the electrode tap T. Meanwhile, disposition areas of the pouch adhesive layers 370c and 370c' and the insulators 350c and 350c' or degrees of adhesion of the pouch adhesive layers 370c and 370c' may be determined based on durability of the battery cell 10 and ease of fracture of the electrode lead 300c. An exemplary embodiment in which the insulator 350c and the pouch adhesive layer 370c are formed to have wider areas than those of the insulator 350c' and the pouch adhesive layer 370c' based on the weak part 330c is illustrated in FIG. 18A. In particular, a fracture property of the electrode lead 300c may be improved.

The weak part 330c may be disposed between the first and second inner leads 321c and 322c as illustrated in FIG. 18A. The weak part 330c may be disposed not to be covered by the pouch adhesive layers 370c and 370c' and the insulators 350c and 350c' (e.g., remains exposed). In particular, the insulators 350c and 350c' may be positioned in a diagonal direction based on the weak part 330c, and the pouch adhesive layers 370c and 370c' may be positioned in a diagonal direction based on the weak part 330c. In other words, the insulators 350c and 350c' and the pouch adhesive layers 370c and 370c' may be disposed to alternate with each other based the weak part 330c. A notch may be formed in the weak part 330c to decrease a thickness or width of the inner lead 320c. A point in time of fracture of the inner lead 320c may be adjusted by a thickness or width of the notch. For example, a depth of a notch of the weak part 330c fractured when a voltage of the battery cell 10 is about 5V may be greater than that of a notch of the weak part 330c fractured when the voltage of the battery cell 1 0 is about 6V.

Referring to FIGS. 18A and 18B, when the battery cell 10 starts to be filled with gas due to overcharge, the pouch case 14 may expand, and the first and second surfaces 14a and 14b may be separated apart. In particular, as illustrated in FIG. 18B, the first inner lead 321c may move together with the second surface 14b by the pouch adhesive layer 370c, and the second inner lead 322c may move together with the first surface 14a by the pouch adhesive layer 370c'. However, the pouch adhesive layers 370c and 370c' may be positioned in the diagonal direction based on the weak part 330c. Therefore, the weak part 330c may be fractured by tension, that is, fracture force, applied when the pouch case 14 expands. Therefore, a function of the electrode lead 300c as a conducting wire may be lost by the fracture of the weak part 330c as described above, and a current passing through the electrode lead 300c may be blocked. Thereafter, as illustrated in FIG. 18C, even though the pouch case 14 is contracted, an open shape of the electrode lead 300c of which at least a portion is made of the plastic material may be maintained as it is. Therefore, even though an abnormal state is terminated, an over-current may be prevented from flowing to the electrode assembly 11 again, and usage safety of the battery cell 10 may be secured.

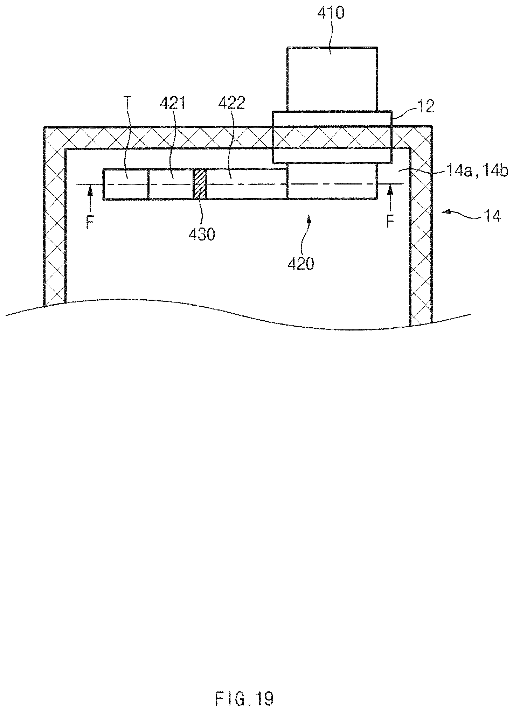

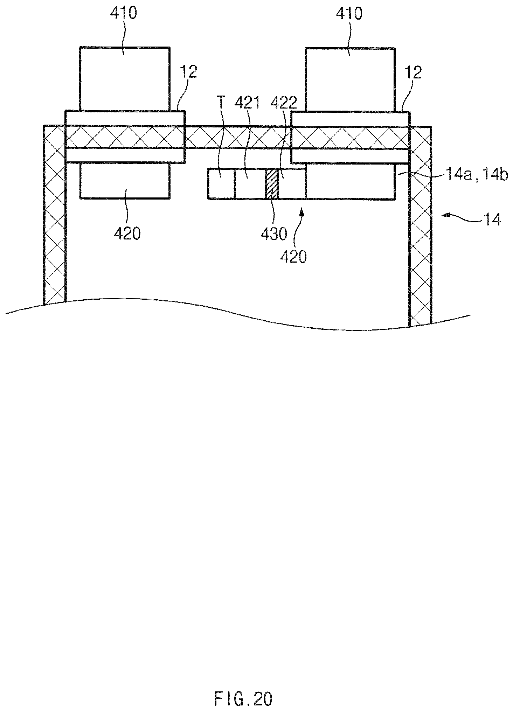

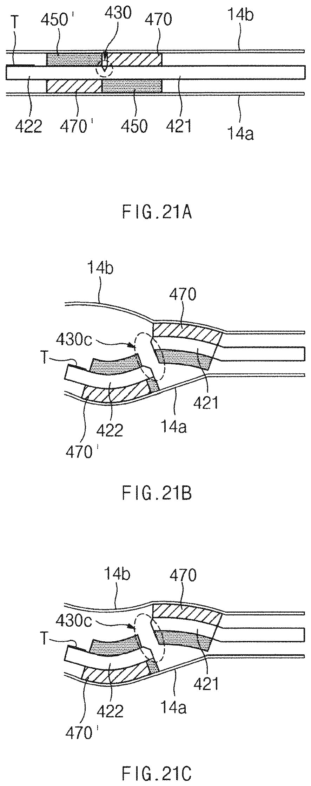

FIG. 19 is a plan view of a battery cell according to a sixth exemplary embodiment of the present disclosure, and FIG. 20 is a plan view illustrating a case in which the sixth exemplary embodiment of the present disclosure is applied to a battery cell in which a plurality of electrode leads are formed on one side of an electrode assembly. FIG. 21A is a cross-sectional view taken along line F-F of FIG. 19, illustrating a state in which the battery cell illustrated in FIG. 19 is normal, FIG. 21B is a cross-sectional view taken along line F-F of FIG. 19, illustrating a state in which the battery cell illustrated in FIG. 19 is expanded and thus the electrode lead is cut, and FIG. 21C is a cross-sectional view taken along line F-F of FIG. 19, illustrating a state in which the battery cell illustrated in FIG. 19 is contracted after being expanded.

The sixth exemplary embodiment of the present disclosure is similar to the above-mentioned exemplary embodiments. Hereinafter, the sixth exemplary embodiment of the present disclosure will be described based on differences from the above-mentioned exemplary embodiments. Referring to FIG. 19, in the battery cell 10 according to the sixth exemplary embodiment of the present disclosure, an inner lead 420 may be formed to be elongated in a left-right direction. In other words, an outer lead 410 may be formed to be elongated in a front and rear direction, and the inner lead 420 may be formed in the left and right direction. Further, the inner lead 420 may be formed in a linear shape without an overlapping or bending section. A first end of the inner lead 420 may be connected to the outer lead 410, and a second end of the inner lead 420 may be connected to an electrode tap T. A planar shape of the inner lead 420 is similar to those in the first and second exemplary embodiments of the present disclosure, and a cross-sectional shape of the inner lead 420 is similar to that in the fifth exemplary embodiment of the present disclosure.

The inner lead 420 may include a first inner lead 421 connected to the outer lead 410; a second inner lead 422 electrically connected to the electrode tap T of the electrode assembly 11; and a weak part 430 disposed between the first and second inner leads 421 and 422. An insulator 450 having an insulation property without an adhesive property may be disposed between the first inner lead 421 and a first surface 14a, and a pouch adhesive layer 470 having an insulation property and an adhesive property may be disposed between the first inner lead 421 and a second surface 14b. Particularly, the pouch adhesive layer 470 and the insulator 450 may be disposed to face each other with the first inner lead 421 interposed therebetween. The first inner lead 421 may be separated from the first surface 14a by the insulator 450 and coupled to the second surface 14b by the pouch adhesive layer 470.

A pouch adhesive layer 470' having the insulation property and the adhesive property may be disposed between the second inner lead 422 and the first surface 14a, and an insulator 450' having the insulation property without the adhesive property may be disposed between the second inner lead 422 and the second surface 14b. Particularly, the pouch adhesive layer 470' and the insulator 450' may be disposed to face each other with the second inner lead 422 interposed therebetween. The second inner lead 422 may be coupled to the first surface 14a by the pouch adhesive layer 470' and may be separated from the second surface 14b by the insulator 450'. The weak part 430 may be disposed between the first and second inner leads 421 and 422 as illustrated in FIG. 21A. Particularly, the weak part 430 may be provided so as not to be covered by the pouch adhesive layers 470 and 470' and the insulators 450 and 450' (e.g., the weak part 430 may be exposed). A notch may be formed in the weak part 430 to decrease a thickness or width of the inner lead 420.

Referring to FIGS. 21A and 21B, when the battery cell 10 starts to be filled with gas due to overcharge, the pouch case 14 may expand, and the first and second surfaces 14a and 14b may be from each other. In particular, as illustrated in FIG. 18B, the first inner lead 421 may move together with the second surface 14b by the pouch adhesive layer 470, and the second inner lead 422 may move together with the first surface 14a by the pouch adhesive layer 470'. However, the pouch adhesive layers 470 and 470'a may be positioned in a diagonal direction based on the weak part 430. Therefore, the weak part 430 may be fractured by tension, that is, fracture force, applied when the pouch case 14 expands. Therefore, a function of the electrode lead 400 as a conducting wire may be lost by the fracture of the weak part 430 as described above, and a current passing through the electrode lead 400 may be blocked.

Thereafter, as illustrated in FIG. 21C, even though the pouch case 14 is contracted, an open shape of the electrode lead 400 of which at least portion is made of the plastic material may be maintained as it is. Therefore, even though an abnormal state is terminated, an over-current may be prevented from flowing to the electrode assembly 11 again, and usage safety of the battery cell 1 0 may be secured. Meanwhile, referring to FIG. 20, the battery cell 10 may be designed with the plurality of electrode leads 400 disposed at one side of the electrode assembly 11 by suitably adjusting disposition of an inner lead 420 in which a notch may be formed and another inner lead 420 in which the notch is not formed.

As described above, according to the exemplary embodiments of the present disclosure, the battery cell may provide one or more of the following advantageous effects.
First, the electrode lead capable of automatically blocking the current applied to the battery cell during overcharge of the battery cell is provided.
Second, the electrode lead may mechanically operate without the separate power source or control part to block the current applied to the battery cell.
Third, the electrode lead capable of having a current blocking function and being integrally manufactured is provided.
Fourth, the length of the electrode lead may be decreased, to thus decrease resistance.
Fifth, it may be possible to more easily set the operation voltage at which the current blocking function is operated.

### SYMBOL OF EACH OF THE ELEMENTS IN THE FIGURES

10: : battery cell
11: : electrode assembly
12: : insulating film
14: : pouch case 14
14a: : first surface
14b: : second surface
100: : electrode lead
110: : outer lead
120: : inner lead
121: : first inner lead
122: : second inner lead
130: : weak part
140: : lead adhesive layer
150: : insulator
160: : bending part
170: : pouch adhesive layer
200: : electrode lead
210: : outer lead
220: : inner lead
221: : first inner lead
222: second inner lead
230: weak part
240: lead adhesive layer
260: bending part
270: pouch adhesive layer
300a, 300b, 300c: electrode lead
310a, 310b, 310c: outer lead
320a, 320b, 320c: inner lead
321a, 321b, 321c: first inner lead
322a, 322b, 322c: second inner lead
323a, 323b: intermediate lead
330a, 330b, 330c: weak part
340a, 340b: lead adhesive layer
350a, 350a', 350b, 350b', 350c, 350c': insulator
360a, 360a', 360b, 360b': bending part
370a, 370a', 370b, 370b', 370c, 370c': pouch adhesive layer
400: electrode lead
410: outer lead
420: inner lead
421: first inner lead
422: second inner lead
430: weak part
450, 450': insulator 450
470, 470': pouch adhesive layer

## Claims

1. A battery cell (10), comprising:
an electrode assembly (11);
a pouch case (14) that accommodates the electrode assembly (11) therein; and
an electrode lead (100) including an outer lead (110) that protrudes outside the pouch case (14) and an inner lead (120) disposed between the outer lead (110) and the electrode assembly (11), accommodated in the pouch case (14), and cut by tension applied when the pouch case (14) expands,
the battery cell (10) **characterized in that**
the pouch case (14) is formed of a first surface (14a) and a second surface (14b) that face each other, and
a portion of the inner lead (120) is coupled to the first surface (14a) and another portion of the inner lead (120) is coupled to the second surface (14b) such that the tension is applied to the inner lead (120) when the pouch case (14) is expanded.

2. The battery cell (10) according to claim 1, wherein the inner lead (120) includes:
a first inner lead connected to the outer lead (110) and coupled to the first surface (14a); and
a second inner lead connected to the electrode assembly (11) and coupled to the second surface (14b).

3. The battery cell (10) according to claim 2, wherein pouch adhesive layers that adheres the pouch case (14) and the inner lead (120) to each other are formed between the first surface (14a) and the first inner lead and between the second surface (14b) and the second inner lead, respectively, and the inner lead (120) further includes a weak part formed to have higher brittleness than that of the pouch adhesive layer.

4. The battery cell (10) according to claim 3, wherein the inner lead (120) further includes a bending part that connects a first end of the first inner lead and a first end of the second inner lead to each other, and bent when the pouch case (14) expands.

5. The battery cell (10) according to claim 4, wherein the pouch adhesive layer is formed with an empty space formed in a region between the first surface (14a) and the first inner lead and between the second surface (14b) and the second inner lead, and the weak part is formed in a portion that corresponds to the empty space.

6. The battery cell (10) according to claim 4, wherein the weak part is formed in the bending part.

7. The battery cell (10) according to claim 3, wherein a notch is formed in the weak part to decrease a thickness or width of the inner lead (120).

8. The battery cell (10) according to claim 2, further comprising:
an insulator having an insulation property without an adhesive property is disposed between the first inner lead and the first surface (14a), a pouch adhesive layer having an insulation property and an adhesive property is disposed between the first inner lead and the second surface (14b); and
a pouch adhesive layer having the insulation property and the adhesive property is disposed between the second inner lead and the first surface (14a), and an insulator having the insulation property without the adhesive property is disposed between the second inner lead and the second surface (14b),
wherein the inner lead (120) includes a weak part disposed between the first and second inner leads and formed to have higher brittleness than that of the pouch adhesive layers.

9. The battery cell (10) according to claim 3, further comprising an intermediate lead disposed between the first and second inner leads, wherein the intermediate lead is disposed to overlap the first and second inner leads between the first and second inner leads.

10. The battery cell (10) according to claim 9, wherein a lead adhesive layer having an insulation property and an adhesive property is disposed in any one of a space between the first inner lead and the intermediate lead and a space between the second inner lead and the intermediate lead.

11. The battery cell (10) according to claim 10, wherein an insulator having an insulation property without an adhesive property is disposed in the other of the space between the first inner lead and the intermediate lead and the space between the second inner lead and the intermediate lead.

12. The battery cell (10) according to claim 11, wherein the inner lead (120) includes a pair of bending parts that connect the first inner lead and the intermediate lead and that connect the intermediate lead and the second inner lead to each other, respectively, the bending parts being bent, respectively, to disposed the intermediate lead to overlap the first and second inner leads between the first and second inner leads.

13. The battery cell (10) according to claim 12, wherein the weak part is disposed in any one of the pair of bending parts.

14. The battery cell (10) according to claim 13, wherein the insulator is disposed in any one of the space between the first inner lead and the intermediate lead and the space between the intermediate lead and the second inner lead, corresponding to the weak part.

15. The battery cell (10) according to claim 9, wherein the first inner lead, the intermediate lead, and the second inner lead are bent in a 'S' shape to be formed integrally with each other.

## Patentansprüche

1. Batteriezelle (10), umfassend:
eine Elektrodenanordnung (11),
eine Beutelhülle (14), welche die Elektrodenanordnung (11) darin aufnimmt, und
eine Elektrodenleitung (100), die eine äußere Leitung (110), die außerhalb der Beutelhülle (14) vorsteht, und eine innere Leitung (120), die zwischen der äußeren Leitung (110) und der Elektrodenanordnung (11) angeordnet ist, aufweist, die in der Beutelhülle (14) aufgenommen und durch Spannung, die angelegt wird, wenn sich die Beutelhülle (14) ausdehnt, getrennt wird,
wobei die Batteriezelle (10) **dadurch gekennzeichnet ist, dass**
die Beutelhülle (14) aus einer ersten Fläche (14a) und einer zweiten Fläche (14b) gebildet ist, die einander zugewandt sind, und
ein Abschnitt der inneren Leitung (120) mit der ersten Fläche (14a) gekoppelt ist und ein anderer Abschnitt der inneren Leitung (120) mit der zweiten Fläche (14b) gekoppelt ist, so dass die Spannung an die innere Leitung (120) angelegt wird, wenn sich die Beutelhülle (14) ausdehnt.

2. Batteriezelle (10) nach Anspruch 1, wobei die innere Leitung (120) Folgendes aufweist:
eine erste innere Leitung, die mit der äußeren Leitung (110) verbunden und mit der ersten Fläche (14a) gekoppelt ist, und eine zweite innere Leitung, die mit der Elektrodenanordnung (11) verbunden und mit der zweiten Fläche (14b) gekoppelt ist.

3. Batteriezelle (10) nach Anspruch 2, wobei Beutelklebeschichten, die die Beutelhülle (14) und die innere Leitung (120) aneinander kleben, jeweils zwischen der ersten Fläche (14a) und der ersten inneren Leitung und zwischen der zweiten Fläche (14b) und der zweiten inneren Leitung gebildet sind, und die innere Leitung (120) ferner einen schwachen Teil aufweist, der gebildet ist, um eine höhere Sprödigkeit zu haben als die der Beutelklebeschicht.

4. Batteriezelle (10) nach Anspruch 3, wobei die innere Leitung (120) ferner einen Biegeteil aufweist, der ein erstes Ende der ersten inneren Leitung und ein erstes Ende der zweiten inneren Leitung miteinander verbindet, und sich biegt, wenn sich die Beutelhülle (14) ausdehnt.

5. Batteriezelle (10) nach Anspruch 4, wobei die Beutelklebeschicht mit einem leeren Raum gebildet ist, der in einem Bereich zwischen der ersten Fläche (14a) und der ersten inneren Leitung und zwischen der zweiten Fläche (14b) und der zweiten inneren Leitung gebildet ist, und der schwache Teil in einem Abschnitt gebildet ist, der dem leeren Raum entspricht.

6. Batteriezelle (10) nach Anspruch 4, wobei der schwache Teil in dem Biegeteil gebildet ist.

7. Batteriezelle (10) nach Anspruch 3, wobei eine Kerbe in dem schwachen Teil gebildet ist, um eine Dicke oder Breite der inneren Leitung (120) zu verringern.

8. Batteriezelle (10) nach Anspruch 2, ferner umfassend:
ein Isolator mit einer Isoliereigenschaft ohne eine Klebeeigenschaft, die zwischen der ersten inneren Leitung und der ersten Fläche (14a) angeordnet ist, eine Beutelklebeschicht mit einer Isoliereigenschaft und einer Klebeeigenschaft, die zwischen der ersten inneren Leitung und der zweiten Fläche (14b) angeordnet ist, und
eine Beutelklebeschicht mit der Isoliereigenschaft und der Klebeeigenschaft, die zwischen der zweiten inneren Leitung und der ersten Fläche (14a) angeordnet ist und ein Isolator mit der Isoliereigenschaft ohne der Klebeeigenschaft, der zwischen der zweiten inneren Leitung und der zweiten Fläche (14b) angeordnet ist,
wobei die innere Leitung (120) einen schwachen Teil aufweist, der zwischen der ersten und zweiten inneren Leitung angeordnet und gebildet ist, um eine höhere Sprödigkeit zu haben als die der Beutelklebeschichten.

9. Batteriezelle (10), nach Anspruch 3, ferner umfassend eine Zwischenleitung, die zwischen der ersten und zweiten inneren Leitung angeordnet ist, wobei die Zwischenleitung angeordnet ist, um die erste und zweite innere Leitung zwischen der ersten und zweiten inneren Leitung zu überlappen.

10. Batteriezelle (10) nach Anspruch 9, wobei eine Leitungsklebeschicht mit einer Isoliereigenschaft und einer Klebeeigenschaft in einem von einem Raum zwischen der ersten inneren Leitung und der Zwischenleitung und einem Raum zwischen der zweiten inneren Leitung und der Zwischenleitung angeordnet ist.

11. Batteriezelle (10) nach Anspruch 10, wobei ein Isolator mit einer Isoliereigenschaft ohne eine Klebeeigenschaft in dem anderen von dem Raum zwischen der ersten inneren Leitung und der Zwischenleitung und dem Raum zwischen der zweiten inneren Leitung und der Zwischenleitung angeordnet ist.

12. Batteriezelle (10) nach Anspruch 11, wobei die innere Leitung (120) ein Paar von Biegeteilen aufweist, die jeweils die erste innere Leitung und die Zwischenleitung verbinden und die die Zwischenleitung und die zweite innere Leitung miteinander verbinden, wobei die Biegeteile jeweils gebogen sind, um die Zwischenleitung anzuordnen, um die erste und zweite innere Leitung zwischen der ersten und zweiten inneren Leitung zu überlappen.

13. Batteriezelle (10) nach Anspruch 12, wobei der schwache Teil in einem von dem Paar von Biegeteilen angeordnet ist.

14. Batteriezelle (10) nach Anspruch 13, wobei der Isolator in einem von dem Raum zwischen der ersten inneren Leitung und der Zwischenleitung und dem Raum zwischen der Zwischenleitung und der zweiten inneren Leitung entsprechend dem schwachen Teil angeordnet ist.

15. Batteriezelle (10) nach Anspruch 9, wobei die erste innere Leitung, die Zwischenleitung und die zweite innere Leitung in einer ,S'-Form gebogen sind, um einstückig miteinander gebildet zu sein.

## Revendications

1. Élément de batterie (10) comprenant :
un ensemble électrode (11);
un boîtier-sachet (14) dans lequel est logé l'ensemble électrode (11); et
un conducteur d'électrode (100) comprenant un conducteur externe (110) qui fait saillie à l'extérieur du boîtier-sachet (14) et un conducteur interne (120) disposé entre le conducteur externe (110) et l'ensemble électrode (11), logé dans le boîtier-sachet (14), et coupé par la tension appliquée lorsque le boîtier-sachet (14) se dilate,
l'élément de batterie (10) étant **caractérisé en ce que** le boîtier-sachet (14) est formé d'une première surface (14a) et d'une seconde surface (14b) qui se font face, et une partie du conducteur interne (120) est couplée à la première surface (14a) et une autre partie du conducteur interne (120) est couplée à la seconde surface (14b) de sorte que la tension soit appliquée au conducteur interne (120) lorsque le boîtier-sachet (14) est dilaté.

2. Élément de batterie (10) selon la revendication 1, dans lequel le conducteur interne (120) comprend :
un premier conducteur interne connecté au conducteur externe (110) et couplé à la première surface (14a); et un second conducteur interne connecté à l'ensemble électrode (11) et couplé à la seconde surface (14b).

3. Élément de batterie (10) selon la revendication 2, dans lequel des couches adhésives de sachet qui font adhérer le boîtier-sachet (14) et le conducteur interne (120) sont formées entre la première surface (14a) et le premier conducteur interne et entre la seconde surface (14b) et le second conducteur interne, respectivement, et le conducteur interne (120) comprend en outre une partie faible formée pour avoir une fragilité supérieure à celle de la couche adhésive de sachet.

4. Élément de batterie (10) selon la revendication 3, dans lequel le conducteur interne (120) comprend en outre une partie de flexion qui relie une première extrémité du premier conducteur interne et une première extrémité du second conducteur interne l'une à l'autre, et qui fléchit lorsque le boîtier-sachet (14) se dilate.

5. Élément de batterie (10) selon la revendication 4, dans lequel la couche adhésive de sachet est munie d'un espace vide formé dans une région située entre la première surface (14a) et le premier conducteur interne et entre la seconde surface (14b) et le second conducteur interne, et la partie faible est formée dans une partie qui correspond à l'espace vide.

6. Élément de batterie (10) selon la revendication 4, dans lequel la partie faible est formée dans la partie de flexion.

7. Élément de batterie (10) selon la revendication 3, dans lequel une encoche est formée dans la partie faible pour diminuer l'épaisseur ou la largeur du conducteur interne (120).

8. Élément de batterie (10) selon la revendication 2, comprenant en outre :
un isolant ayant une propriété isolante sans propriété adhésive étant disposé entre le premier conducteur interne et la première surface (14a), une couche adhésive de sachet ayant une propriété isolante et une propriété adhésive étant disposée entre le premier conducteur interne et la seconde surface (14b);
une couche adhésive de sachet ayant la propriété isolante et la propriété adhésive étant disposée entre le second conducteur interne et la première surface (14a), et un isolant possédant la propriété isolante sans la propriété adhésive étant disposé entre le second conducteur interne et la seconde surface (14b),
dans lequel le conducteur interne (120) comprend une partie faible disposée entre les premier et second conducteurs internes et formée pour avoir une fragilité supérieure à celle des couches adhésives de sachet.

9. Élément de batterie (10) selon la revendication 3, comprenant en outre un conducteur intermédiaire disposé entre les premier et second conducteurs internes, dans lequel le conducteur intermédiaire est disposé de manière à chevaucher les premier et second conducteurs internes entre les premier et second conducteurs internes.

10. Élément de batterie (10) selon la revendication 9, dans lequel une couche adhésive de conducteur ayant une propriété isolante et une propriété adhésive est disposée dans l'un quelconque d'un espace entre le premier conducteur interne et le conducteur intermédiaire et d'un espace entre le second conducteur interne et le conducteur intermédiaire.

11. Élément de batterie (10) selon la revendication 10, dans lequel un isolant ayant une propriété isolante sans propriété adhésive est disposé dans l'autre de l'espace entre le premier conducteur interne et le conducteur intermédiaire et de l'espace entre le second conducteur interne et le conducteur intermédiaire.

12. Élément de batterie (10) selon la revendication 11, dans lequel le conducteur interne (120) comprend une paire d'éléments de flexion qui relient le premier conducteur interne et le conducteur intermédiaire et qui relient le conducteur intermédiaire et le second conducteur interne l'un à l'autre, respectivement, les parties de flexion étant fléchies, respectivement, pour disposer le conducteur intermédiaire de manière à chevaucher les premier et second conducteurs internes entre les premier et second conducteurs internes.

13. Élément de batterie (10) selon la revendication 12, dans lequel la partie faible est disposée dans l'une quelconque des paires de parties de flexion.

14. Élément de batterie (10) selon la revendication 13, dans lequel l'isolant est disposé dans l'un quelconque de l'espace entre le premier conducteur interne et le conducteur intermédiaire et de l'espace entre le conducteur intermédiaire et le second conducteur interne, correspondant à la partie faible.

15. Élément de batterie (10) selon la revendication 9, dans lequel le premier conducteur interne, le conducteur intermédiaire, et le second conducteur interne sont pliés en forme de «S» pour être formés de manière solidaire les uns des autres.
